# EUROPÄISCHE PATENTANMELDUNG

(11) **EP 1 000 827 A2**
(43) Veröffentlichungstag der Anmeldung: **17.05.2000**
(21) Anmeldenummer: 99118602.4
(22) Anmeldetag: 21.09.1999
(51) Int. Cl.: B60S 1/38

(54) **Wischblatt zum Reinigen vom Scheiben**

(30) Priorität: 13.11.1998 DE 19852334
(71) Anmelder: ROBERT BOSCH GMBH, 70442 Stuttgart (DE)
(72) Erfinder: Van Deursen, Andre, 3300 Tienen (BE)

(57) **Zusammenfassung**

Die Erfindung betrifft ein Wischblatt zum Reinigen von Scheiben, insbesondere für Windschutzscheiben von Kraftfahrzeugen, mit einem mehrgliedrigen, mindestens einen Krallenbügel (18) aufweisenden Tragbügelgestell (12) und mit einer Wischleiste (22), die einen einen Längskanal (32) aufweisenden Wischleistenkopf (24) und eine auf der zu wischenden Scheibe auflegbare, mit dem Wischleistenkopf (24) verbundenen Wischlippe (28) umfaßt, wobei in dem Längskanal (32) eine Federschiene (34) angeordnet ist, die von Krallen (20) des mindestens einen Krallenbügels (18) umgriffen ist und Sicherungsmittel (36) zum Arretieren der Federschiene (34) aufweist. Es wird vorgeschlagen, daß die Sicherungsmittel die Form einer, die Federschiene (34) durchsetzenden, rundum geschlossenen Aussparung (36) aufweist, in deren Richtung die Enden (30) der Krallen (20) vorgespannt sind.

## Beschreibung

### Stand der Technik

Die Erfindung geht aus von einem Wischblatt nach der Gattung des Hauptanspruchs. Es ist schon ein derartiges Wischblatt bekannt (DE-OS 43 20 637) bei dem die Federleiste Sicherungsmittel aufweist, die in Form von Verbreiterungen seitlich an der Federleiste abstehen, jeweils paarweise zueinander zugeordnet und mit Abstand voneinander angeordnet sind. Die Haltekrallen der Krallenbügel greifen zwischen diese beabstandeten Verbreiterungen und sichern so die Federleiste gegen ein Verrutschen aus dem Längskanal. Beim Herstellen des Wischblatts wird die Federschiene in den Längskanal eingeschoben, wobei die Verbreiterungen direkt am Längskanal anliegen und einen Widerstand gegen das Einschieben erzeugen. Die so vorbereitete Wischleiste wird in die Krallen der Krallenbügel eingeführt, wobei die Verbreiterungen auch hier zumindest im Bereich der Krallen dem Einführen einen Widerstand entgegensetzen.

### Vorteile der Erfindung

Das erfindungsgemäße Wischblatt mit den Merkmalen des Hauptanspruchs hat den Vorteil, daß sowohl das Einführen der Federschiene in den Längskanal als auch das Einführen der so vorbereiteten Wischleiste in die Krallenbügel ohne den bekannten Widerstand erfolgen kann. Die Arretierung wird durch Einbiegen und damit durch Vorspannen der Krallenenden in Richtung auf die Aussparung erzielt. Dadurch wird Material des Wischleistenkopfes in die Aussparung gedrückt, das sich formgenau der Aussparung anpaßt.

Das Einbringen der Aussparungen in die Federschiene kann im gleichen Arbeitsgang wie das Ausstanzen der Federschiene selbst erfolgen. Ein nachträgliches Verprägen, um die Verbreiterungen zu erhalten, entfällt somit.

Ist die Aussparung von länglicher Gestalt und erstreckt sich in Richtung der Längserstreckung der Federschiene, wobei die Länge der Aussparung bevorzugt der Breite der Krallen entspricht, ist eine Längsarretierung in beide Richtungen gewährleistet.

Auch diese Ausführung weist, wie der zitierte Stand der Technik, den Vorteil auf, daß eine direkte Berührung zwischen der Federschiene und den Haltekrallen und eine damit verbundene Geräuschentwicklung vermieden ist, weil die Krallen auch den Wischleistenkopf mit umfassen.

In vorteilhafter Weise kann die Federschiene symmetrisch an jedem Ende eine Aussparung beinhalten, so daß eine beidseitige Montage ermöglicht bzw. eine Verwechslung der Montagerichtung vermieden wird.

### Zeichnung

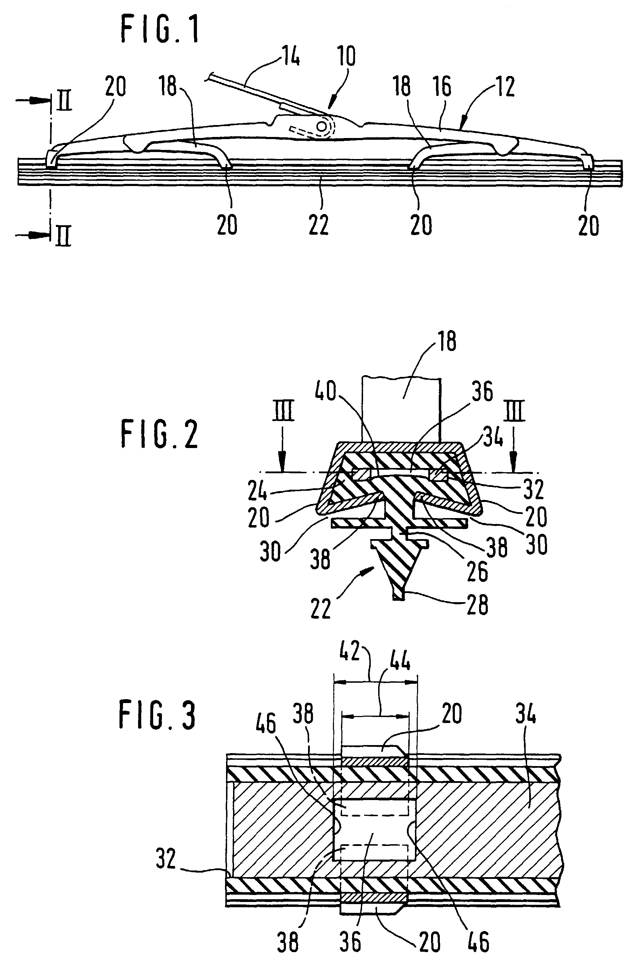

Ein Ausführungsbeispiel der Erfindung ist in der Zeichnung dargestellt und in der nachfolgenden Beschreibung näher erläutert. Es zeigen Figur 1 ein Wischblatt in Seitenansicht, Figur 2 einen Schnitt nach Linie II-II in Figur 1 in vergrößerter Darstellung und Figur 3 einen Schnitt nach Linie III-III in Figur 2.

### Beschreibung des Ausführungsbeispiels

Ein in Figur 1 dargestelltes Wischblatt 10 weist ein mehrgliedriges Tragbügelgestell 12 auf, das aus mehreren Gestellgliedern zusammengesetzt ist. Es hat einen mit einem angetriebenen Wischarm 14 gelenkig verbundenen Hauptbügel 16, an dessen Ende je ein Krallenbügel 18 waagebalkenartig angelenkt ist. An den Enden eines jeden Krallenbügels 18 sind Haltekrallenpaare 20 angeordnet, welche eine aus einem elastischen Material vorzugsweise durch Extrusion hergestellte Wischleiste 22 an dem Tragbügelgestell 12 halten. Wie insbesondere aus Figur 2 ersichtlich ist, weist die langgestreckte Wischleiste 22 einen Wischleistenkopf 24 auf, mit dem über einen sogenannten Kippsteg 26 eine Wischlippe 28 verbunden ist.

Die Wischlippe 28 liegt mit ihrem freien Ende auf der zu wischenden Scheibe auf. Die Auflagekraft wird über den Wischarm 14 auf das Wischblatt 10 ausgeübt und durch das Tragbügelgestell 16, 18 vorschriftsmäßig auf die Wischleiste 22 übertragen.

Wie die Figuren 2 und 3 verdeutlichen, sind beim Ausführungsbeispiel an jedem Ende eines Krallenbügels 18 jeweils ein Krallenpaar 20 angeordnet. Die Einzelkrallen eines jeden Krallenpaars 20 liegen bezogen auf die Längsachse des Wischblatts einander gegenüber. Sie übergreifen einen Teil des Wischleistenkopfes 24 und greifen in Krallennuten 30 ein, welche einander gegenüberliegend als randoffene Nuten am Wischleistenkopf 24 ausgebildet sind. Die Haltekrallenpaare 20 umfassen diesen Teil des Wischleistenkopfes 24 derart, daß die Wischleiste in den Krallen verschiebbar geführt ist.

Weiter ist im Wischleistenkopf 24 ein als rundum geschlossener Durchgangskanal ausgebildeter Längskanal 32 vorhanden (Figur 2), in welchem eine Federschiene 34 untergebracht ist. Die Federschiene 34 ist relativ steif, jedoch in Grenzen elastisch, so daß sie zur weiteren ordnungsgemäßen Verteilung der Auflagekraft des Wischblatts 10 auf der zu wischenden Scheibe beiträgt. Die Federschiene 34 erstreckt sich im wesentlichen über die gesamte Länge des Wischblattkopfes 24. Die Länge des Wischblattkopfes 24 ist so bemessen, daß er mit beiden Endabschnitten aus den äußeren Krallenpaaren 20 herausragt. Der Querschnitt des Längskanals 32 ist dem Querschnitt der Federschiene 34 angepaßt, so daß die Federschiene 34 in den Längskanal 32 eingebracht werden kann.

Wie insbesondere Figur 3 zeigt, hat die Federschiene 34 an ihrem einen Endbereich eine Aussparung 36, die ungefähr in der Mitte der Federschienenbreite angeordnet ist. Diese Aussparung ist bei der beim Ausführungsbeispiel aus einem Federbandstahl bestehenden Federleiste 34 ausgestanzt.

In Figur 3 ist die Federschiene 34 in ihrer Betriebslage gezeigt, in der die Aussparung 36 direkt zwischen dem Krallenpaar 20 angeordnet ist. Die in den Krallennuten 30 angeordneten Krallenenden 38 sind in Richtung auf die Federschiene 34 und damit in Richtung auf die Aussparung 36 vorgespannt, so daß sich ein Wulst 40 in die Aussparung 36 hineinwölbt. Die Federschiene 34 ist auf diese Weise im Längskanal 32 fixiert.

Die Länge 42 der Aussparung 36 ist dabei so getroffen, daß sie die Breite 44 des Krallenpaars 20 knapp überragt. Damit liegt der Wulst 40 auch an den die Aussparung 36 in Längsrichtung begrenzenden Wänden 46 an, so daß eine Längsverschiebung sowohl der Federschiene 34 im Längskanal 32 als auch der Wischleiste 22 im Tragbügelgestell 12 sicher vermieden ist.

Die Aussparung 36 bildet auf diese Weise die Sicherungsmittel, durch welche die Wischleiste 22 am Tragbügelgestell 12 und die Federschiene 34 in dem Wischleistenkopf 24 festgehalten werden.

Durch geringfügiges Aufbiegen des Krallenpaares 20 kann jedoch die Wischleiste 22 ohne weiteres vom Tragbügelgestell 12 gelöst und durch eine neue, schon mit der Federschiene 34 versehene Wischleiste 22 ersetzt werden. Zur Sicherung der Wischleiste am Tragbügelgestell 12 müssen dann lediglich die beiden Krallen des Krallenpaares 20 zusammengedrückt werden und zwar derart, daß sich wieder eine zuverlässige Sicherung für die Wischleiste 22 am Tragbügelgestell 12 ergibt. Die anderen Haltekrallenpaare 20 dienen lediglich der ordnungsgemäßen Führung der Wischleiste 22, so daß diese sich während des Wischvorgangs ohne Schwierigkeiten an die Krümmung der zu wischenden Scheibe anpassen kann.

Nicht dargestellt ist, daß die Federschiene 34 an beiden Enden symmetrisch angeordnet Aussparungen 36 aufweisen kann, wobei jedoch nur eine Aussparung 36 wie beschrieben als Sicherungsmittel eingesetzt wird. Die andere Aussparung 36 dient lediglich der Vereinfachung der Montage, da dadurch vermieden ist, daß eine Federschiene 34 falsch montiert wird.

## Patentansprüche

1. Wischblatt zum Reinigen von Scheiben, insbesondere für Windschutzscheiben von Kraftfahrzeugen, mit einem mindestens einen Krallenbügel (18) aufweisenden Tragbügelgestell (12) und mit einer Wischleiste (22), die einen einen Längskanal (32) aufweisenden Wischleistenkopf (24) und eine auf der zu wischenden Scheibe auflegbare, mit dem Wischleistenkopf (24) verbundenen Wischlippe (28) umfaßt, wobei in dem Längskanal (32) eine Federschiene (34) angeordnet ist, die von Krallen (20) des mindestens einen Krallenbügels (18) umgriffen ist und die Sicherungsmittel (36) zum Arretieren der Federschiene (34) im Bereich der Krallen (20) aufweist, dadurch gekennzeichnet, daß die Sicherungsmittel die Form einer, die Federschiene (34) durchsetzenden, rundum geschlossenen Aussparung (36) aufweist, in deren Richtung die Enden (30) der Krallen (20) vorgespannt sind.

2. Wischblatt nach Anspruch 1, dadurch gekennzeichnet, daß die Aussparung (36) länglich ist und sich in Längserstreckung der Federschiene (34) erstreckt.

3. Wischblatt nach einem der Ansprüche 1 oder 2, dadurch gekennzeichnet, daß die Länge (42) der Aussparung (36) mindestens der Breite (44) der Krallen (20) entspricht.

4. Wischblatt nach einem der vorhergehenden Ansprüche, dadurch gekennzeichnet, daß die Federschiene (34) je zwei Aussparungen (36) aufweist, die symmetrisch an den Enden der Federschiene (34) angeordnet sind.
